# FASCICULE DE BREVET EUROPEEN

(11) **EP 2 057 588 B1**
(45) Date de publication et mention de la délivrance du brevet: **15.09.2010**
(21) Numéro de dépôt: 07823411.9
(22) Date de dépôt: 10.08.2007
(51) Int. Cl.: G06K 19/077, G06K 19/073

(54) **PÉRIPHÉRIQUE DE SÉCURITÉ INTÉGRÉ À UN OBJET SANS CONTACT DE TYPE DOCUMENT SÉCURISÉ À DISPOSITIF RADIOFRÉQUENCE**
EIN KONTAKTLOSES OBJEKT IN FORM EINES SICHEREN DOKUMENTS MIT RFID INTEGRIERTEM SICHEREN PERIPHERIEGERÄT
SECURITY PERIPHERAL INTEGRATED WITH A CONTACTLESS OBJECT OF SECURE DOCUMENT TYPE WITH RADIOFREQUENCY DEVICE

(30) Priorité: 11.08.2006 FR 0607297
(43) Date de publication de la demande: 13.05.2009
(73) Titulaire: ASK S.A., 06560 Valbonne (FR)
(72) Inventeur: SABBAH, Elias, F-06560 Valbonne (FR); MANIGAULT, Serge, F-69300 Caluire et Cuire (FR); PARRAULT, Olivier, F-06220 Golfe Juan (FR)
(86) Numéro de dépôt international: PCT/FR2007/001359
(87) Numéro de publication internationale: WO 2008/020125

(56) Documents cités:
- FR-A- 2 879 789
- US-A1- 2005 274 794

## Description

### Domaine technique

La présente invention concerne un périphérique pour objet portable sans contact et concerne en particulier un périphérique de sécurité intégré à un objet sans contact de type document sécurisé à dispositif radiofréquence.

### Etat de la technique

Les dispositifs d'identification radiofréquence (RFID) sans contact sont de plus en plus utilisés pour l'identification des personnes circulant dans des zones à accès contrôlé ou transitant d'une zone à une autre. Le marché des documents sécurisés de type document d'identité tel que passeport, carte d'identité ou autre est de ce fait en plein essor. Un dispositif RFID sans contact est un dispositif constitué d'une antenne et d'une puce connectée aux bornes de l'antenne. La puce n'est généralement pas alimentée par piles (batteries) et reçoit son énergie par couplage électromagnétique entre l'antenne du lecteur et l'antenne du dispositif RFID, des informations sont échangées entre le dispositif RFID et le lecteur et en particulier les informations stockées dans la puce qui ont trait à l'identification du possesseur de l'objet sur lequel se trouve le dispositif RFID et son autorisation à pénétrer dans une zone à accès contrôlé.

Ainsi, les passeports peuvent incorporer des dispositifs RFID pour l'identification du possesseur du passeport. La mémoire de la puce contient des informations telles que l'identité du possesseur du passeport, son pays d'origine, sa nationalité, les visas des différents pays visités, les dates d'entrée, les restrictions de circulation, les éléments biométriques, etc. Afin d'inclure le dispositif RFID dans le passeport, il existe plusieurs solutions qui consiste soit à imprimer directement l'antenne sur le plat de la couverture du passeport et à y connecter la puce soit d'utiliser un élément extérieur appelé « inlay » comportant le dispositif RFID. Quelle que soit la solution, le dispositif RFID se trouve incorporé soit dans le plat de couverture inférieur du passeport soit dans le plat supérieur. Dans le cas d'une carte d'identité, l'antenne est directement sérigraphiée sur l'une des couches constitutives de la carte et la puce y est connectées. Un tel dispositif est décrit dans le document US-A1-2005/0 274 794.

L'accès aux données de la puce se fait par couplage électromagnétique à distance avec un lecteur muni également d'une antenne. Lorsque l'antenne du lecteur est alimentée elle est parcouru par un courant électrique qui engendre un flux électromagnétique. Pour être lu le livret d'identité est placé sur le lecteur sur un emplacement prévu à cet effet. Une fois le livret en place, l'antenne du livret est traversée par les lignes du champ électromagnétique émis par le lecteur, l'antenne alors accordée dans la même bande de fréquence que le lecteur reçoit l'énergie nécessaire à son alimentation, elle peut donc dialoguer avec le lecteur et échanger des données. Pour que la communication soit optimale, l'antenne du livret doit être placée parallèlement à l'antenne du lecteur et à une distance du lecteur qui doit être inférieure à la distance minimale requise pour qu'il y ait suffisamment d'énergie pour faire fonctionner la puce.

Le problème majeur qui se pose de façon commune aux documents sécurisés sans contact en général, et en particulier aux documents sécurisés qui contiennent des informations personnelles de type état civil ou biométrique, est la confidentialité des informations contenues dans le dispositif RFID incorporé dans la puce du document. L'accès aux données contenues dans la puce doit pouvoir être maîtrisé et contrôlé, et ce, en particulier lorsque le document sécurisé n'est pas utilisé afin que les données confidentielles ne soient pas récupérées à l'insu du porteur du document.

Une solution existe telle que décrite dans le document WO 2005/066890. Le document sécurisé qui y est décrit comprend un transpondeur formé d'un module électronique connecté à une antenne disposée sur une surface donnée d'une première partie du document, le transpondeur étant destiné à communiquer grâce à un couplage électromagnétique à distance avec un lecteur, et comprend en outre un élément de masquage passif de l'antenne, supporté par une seconde partie du document, mobile par rapport à la première partie, l'élément de masquage étant apte à minimiser le couplage entre le transpondeur et le lecteur pour rendre difficile la lecture du document dans une position prédéterminée de la seconde partie, correspondant à une position dite fermée du document.

L'inconvénient d'un tel dispositif réside dans le fait que l'action sur le couplage entre le transpondeur et le lecteur n'agit pas tel qu'un interrupteur en tout ou rien mais agit de façon à atténuer le signal afin de minimiser le couplage entre le transpondeur et le lecteur. De plus, l'atténuation du signal est fonction de la fréquence du signal, l'atténuation sera d'autant plus grande que la fréquence du signal est élevée ; or la fréquence de fonctionnement des documents sécurisés est 13,56 MHz telle que définie dans les normes ISO 14443 et 15693. L'atténuation du signal est également fonction des caractéristiques de l'élément de masquage tel que son épaisseur et sa conductivité électrique, mais aussi est fonction de la distance entre l'élément passif et l'antenne du dispositif RFID. Plus l'élément de masquage passif est prêt de l'antenne et plus il est efficace.

Le niveau d'atténuation du signal dépendra donc de la façon dont le document sécurisé est maintenu fermé. Par conséquent, un passeport disposé dans un sac et légèrement ouvert pourra être lu à l'insu de son porteur. De même, un passeport dont les pages sont épaisses du fait de l'usure ou de la présence de visas diminuera l'efficacité de l'élément de masquage passif. Le niveau d'atténuation du signal dépend également de l'épaisseur du passeport.

En outre, la distance minimale de lecture entre le passeport et le lecteur varie en fonction du niveau du champ électromagnétique émis par l'antenne du lecteur. L'efficacité de la communication entre le lecteur et le passeport varie donc selon le champ émis par le lecteur. Cela signifie que même lorsqu'il est équipé d'un masquage passif, le passeport peut être lu avec un lecteur adéquat puisque un masquage passif permet en fait de réduire la distance de lecture. Cette solution ne garantit donc pas au porteur du passeport l'impossibilité d'une lecture intempestive.

### Exposé de l'invention

C'est pourquoi le but de l'invention est de fournir un dispositif qui empêche la lecture intempestive des données contenues dans un objet sans contact de type document sécurisé à dispositif radiofréquence tout en palliant aux inconvénients précités.

L'objet de l'invention est donc un objet portable sans contact comprenant un dispositif radiofréquence principale composé d'une puce principale et d'une antenne principale connectées ensemble de sorte que lorsque l'objet portable rentre dans le champ magnétique d'un lecteur adapté, le dispositif radiofréquence principale assure l'alimentation de la puce et la communication entre la puce et le lecteur. Selon.la caractéristique principale de l'invention, l'objet portable comprend un dispositif secondaire sans contact comprenant une antenne secondaire et un circuit électrique paramétrées de façon à ce que, lorsque les deux antennes rentrent en même temps dans le champ magnétique d'un lecteur adapté, la quantité d'énergie nécessaire pour alimenter le circuit électrique de façon à le faire fonctionner étant inférieure à la quantité d'énergie nécessaire pour alimenter la puce principale de façon à la faire fonctionner, le circuit électrique est alimenté et rend impossible la lecture des données de la puce principale.

### Description brèves des figures

Les buts, objets et caractéristiques de l'invention apparaîtront plus clairement à la lecture de la description qui suit faite en référence aux dessins dans lesquels :
La figure 1 représente un passeport selon un premier mode de réalisation de l'invention,
La figure 2 représente un premier lecteur de dispositif radiofréquence tel qu'un passeport,
La figure 3 représente le passeport et le premier lecteur lors d'une lecture volontaire,
La figure 4 représente une carte d'identité selon une variante du premier mode de réalisation de l'invention,
La figure 5 représente un second lecteur de dispositif radiofréquence tel qu'un carte d'identité,
La figure 6 représente la carte d'identité et le second lecteur lors d'une lecture volontaire,
La figure 7 représente le passeport et le second lecteur lors d'une lecture volontaire,
La figure 8 représente une carte d'identité selon le second mode de réalisation de l'invention.

### Description détaillée de l'invention

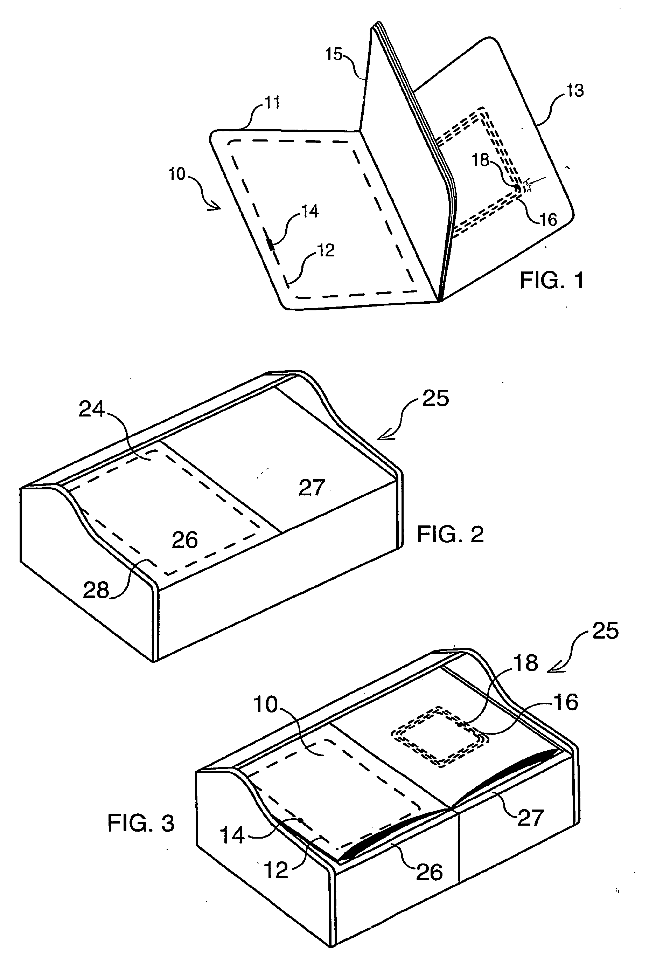

Selon la figure 1, l'objet portable sans contact 10 de type livret tel qu'un passeport comporte une page de couverture avant 11 et une page de couverture arrière 13 et un cahier de pages intérieures 15 inséré entre les deux couvertures. Le dispositif radiofréquence est disposé de préférence sur la couverture arrière du passeport mais pourrait aussi bien être sur la couverture avant du passeport ou bien sur une des pages du cahier intérieur ; Le dispositif radiofréquence comprend une puce électronique 18 et une antenne 16 connectées ensemble. Le dispositif radiofréquence représenté en pointillés sur la figure n'est pas visible car intégré à l'intérieur du passeport dans la couverture, généralement entre un plat d'une des pages de couverture du passeport et la page de garde située en regard. Le dispositif radiofréquence composé de la puce 18 et de l'antenne 16 sera appelé dans la suite de la description dispositif radiofréquence principal. Il est destiné à recevoir de l'énergie et à communiquer grâce à un couplage électromagnétique à distance avec un lecteur approprié. L'antenne 16 est traversée par un courant induit lorsqu'elle rentre dans un champ magnétique produit par l'antenne d'un lecteur et permet donc l'alimentation de la puce en appliquant à ses bornes une tension. La communication entre le dispositif radiofréquence et le lecteur permet l'échange des données et en particulier les informations stockées dans la puce 18 qui ont trait à l'identification de la personne possédant le livret. De ce fait, la puce électronique 18 comprend plusieurs fonctions complexes destinées à traiter les informations en provenance du lecteur. Ainsi, pour pouvoir interpréter, stocker et comparer les informations et dialoguer avec le lecteur, la puce contient un micro contrôleur, de la mémoire, une unité d'entrée/sortie, etc... Le format de l'antenne 16 correspond généralement à celui utilisé pour les cartes sans contact au format carte de crédit et dépend du type de puce utilisé.

Le passeport 10 comprend également une seconde antenne 12 connectée à un circuit électrique par exemple contenu dans une seconde puce électronique 14, l'antenne étant disposée sur la seconde couverture du livret, celle qui ne comporte pas le dispositif radiofréquence principal. La seconde antenne 12 et la seconde puce 14 constituent dans toute la suite de la description le dispositif radiofréquence secondaire. Sur la figure 1, le dispositif radiofréquence secondaire se situe sur la couverture avant du passeport mais il pourrait aussi bien se trouver sur une des pages du cahier intérieur. Alors que l'antenne principale 16 est supportée par une première partie du passeport, la seconde antenne doit être supportée sur une seconde partie du passeport mobile par rapport à la première partie. Comme pour la puce et l'antenne principales 16 et 18, la puce 14 et l'antenne 12 sont connectées ensemble et permettent la réception et l'émission de signaux dans la fréquence porteuse délivrée par le lecteur, à savoir à une fréquence de 13,56 MHz correspondant à la norme 14443. La puce 14 ne contient pas de données spécifiques mais une fonction capable de générer des données inexploitables de façon aléatoire de sorte que les informations émises par le dispositif principal se mélangent et deviennent illisibles.

Le lecteur utilisé pour la lecture du passeport présente une face plane de lecture destinée à recevoir le document à lire par couplage électromagnétique à distance. Le lecteur permet la réception et la transmission des signaux radiofréquences avec le dispositif sans contact donc avec le livret d'identité lorsque celui-ci est placé sur le lecteur de façon à ce que l'antenne principale 16 du passeport soit traversée par les lignes de champ magnétiques émises par le'lecteur, la puce principale est alors alimentée et l'échange des données entre le dispositif radiofréquence principal et le lecteur est possible. Cependant, pour ne pas empêcher la lecture des données de la puce principale 18, la puce secondaire 14 ne doit pas recevoir d'énergie de façon à n'émettre aucunes données. Pour cela, l'antenne 12 ne doit pas rentrer dans le champ magnétique émis par le lecteur de façon à ne pas être traversée par un courant, ce but est atteint par différents moyens selon les modèles des lecteurs.

Le modèle de lecteur représenté sur les figures 2 et 3 est spécialement adapté à la lecture des livrets personnels tel qu'un passeport car sa face supérieure de lecture est légèrement supérieure à la taille d'un passeport ouvert. Dans ce cas, l'antenne du lecteur doit être de la taille du passeport fermé. La face de lecture 24 peut être considérée en deux parties 26 et 27, une partie active et une partie passive. La partie active 26 servant à abriter l'antenne 28 du lecteur tandis que la partie 27, dite passive n'abrite aucun élément constitutif de l'antenne. Lorsque le passeport est disposé sur le lecteur afin d'être lu, la partie du passeport contenant le dispositif radiofréquence principal est plaquée contre la partie active 26 tandis que la partie du passeport contenant le dispositif radiofréquence secondaire est plaquée contre la partie passive 27. De cette façon, seule l'antenne 16 du dispositif radiofréquence principal reçoit de l'énergie. Afin de garantir qu'aucunes lignes du champ magnétique émis par l'antenne du lecteur ne traversent l'antenne 12 du dispositif radiofréquence secondaire il est préférable de placer une plaque de blindage en métal sous la partie passive de la face de lecture 24 du lecteur.

En référence aux figures 1 et 2, lorsque le passeport 10 rentre entièrement dans le champ du lecteur 25, les deux antennes 16 et 12 accordées à la même fréquence que la fréquence porteuse du lecteur reçoivent l'énergie nécessaire à leur alimentation. L'énergie fournie doit être supérieure ou suffisante au bon fonctionnement des applications des puces 18 et 14. La puce 14 n'est pas destinée à dialoguer avec le lecteur ; par conséquent, elle ne contient pas d'intelligence tel qu'un microcontrôleur pour stocker et comparer des informations de sorte que ces fonctions sont beaucoup moins complexes que les fonctions de la puce 18. Chaque fonction de la puce nécessitant de l'énergie, son seuil de déclenchement pour rentrer en phase active est beaucoup plus bas que celui de la puce 18, en d'autre terme, la quantité d'énergie nécessaire pour alimenter la puce 14 de façon à la faire fonctionner est bien inférieure à la quantité d'énergie nécessaire pour alimenter la puce 18 de façon à la faire fonctionner. Par conséquent, la puce 14 consommant moins d'énergie que la puce 18 est alimentée la première. De façon à garantir davantage cette chronologie de télé-alimentation des puces, l'antenne 12 est la plus grande possible. Donc, dés que l'antenne 12 rentre dans le champ, elle récupère en premier l'énergie nécessaire à l'alimentation de la puce 14 qui se met instantanément dans un mode d'émission de données aléatoires. La puce 14 est alimenté en premier, avnt la puce 18. Les signaux échangés utiles entre l'antenne 16 et le lecteur entrent en collision avec les données aléatoires émises par la puce 14 de façon à ce qu'elles se superposent et se mélangent. Les données utiles sont donc brouillées par les données aléatoires et leur lecture n'est pas possible.

En position fermée du passeport, les lignes du champ électromagnétique émis par le lecteur traversent à la fois l'antenne 12 et l'antenne 18. Donc le porteur du passeport peut être sûr que les données personnelles contenues dans son passeport ne seront pas lues à son insu lorsque le passeport est en position fermée. Si le porteur a malencontreusement laissé son passeport en position ouverte ou même légèrement ouvert dans son sac ou dans sa poche, si le passeport se trouve près du lecteur ou éloigné de celui-ci le résultat n'est pas le même. En champ lointain, c'est à dire lorsque le passeport se trouve loin du lecteur, les deux antennes 16 et 12 sont forcément traversées par les lignes du champ électromagnétique émis par le lecteur et comme pour le cas où le passeport est fermé, les données émises à la fois par la puce 14 et par la puce 18 se superposeront et rendront la lecture des données utiles impossible. En revanche, lorsque le porteur du passeport présentera volontairement son passeport, celui-ci pour être lu devra être positionné sur un lecteur approprié qui permettra la lecture uniquement lorsque le passeport est en position ouverte. La lecture des données utiles se fait donc lorsque la puce 18 est alimentée par l'antenne 16 et que la puce 14 n'est pas alimentée. L'antenne 12 ne doit donc pas rentrer dans le champ émis par le lecteur ce qui impose certaines manipulations du passeport par rapport au lecteur. le passeport est présenté sur la partie active de la face d'un lecteur à plat de façon à ce que seule la moitié du passeport comportant l'antenne et la puce principales soient en regard de l'antenne du lecteur. Ainsi pour être lu, le passeport 10 est présenté sur le lecteur ouvert, de façon à ce que la face arrière du passeport soit contre le lecteur comme mentionnée sur la figure 2. Pour la non lecture des données utiles, l'angle d'ouverture du passeport comportant les deux dispositifs est assez importante et varie entre 0 et 90°.

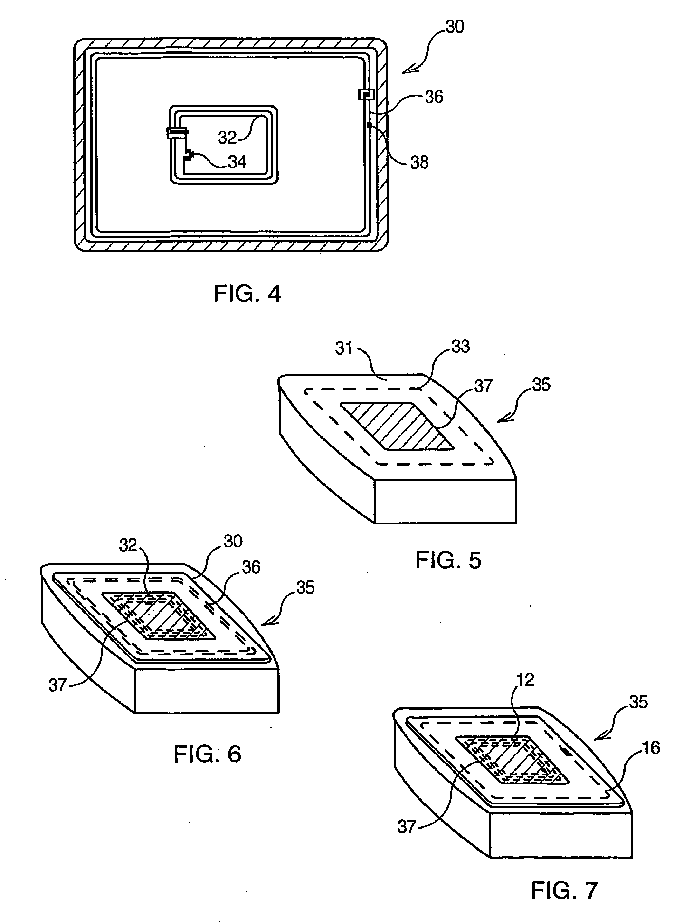

Dans le cas où le document sécurisé est un objet portable sans contact de type carte d'identité 30 comme illustré sur la figure 4, les dispositifs radiofréquence principal et secondaire sont supportés obligatoirement sur la même surface plane du document étant donné que le document ne comporte pas deux parties mobiles l'une par rapport à l'autre. L'enroulement plan de l'antenne du dispositif secondaire est alors dans le même plan que l'antenne principale. Le dispositif secondaire composé de l'antenne secondaire 32 et d'un circuit électrique contenu par exemple dans une puce secondaire 34 est situé au centre de la carte tandis que le dispositif radiofréquence principal composé de l'antenne principale 36 et de la puce 38 est disposé de façon à entourer le dispositif secondaire.

Le lecteur 35 représenté sur la figure 5 comporte une face de lecture 31 qui abrite une antenne 33 destinée à communiquer avec un dispositif sans contact tel que la carte d'identité 30. Lorsque la carte d'identité 30 rentre dans le champ d'un lecteur 35 approprié tel que représenté sur la figure 5, les deux antennes 32 et 36 accordées dans la même bande de fréquence que le lecteur reçoivent l'énergie nécessaire à leur alimentation. L'énergie fournie doit être supérieure ou suffisante au bon fonctionnement des applications des puces 34 et 38. Les fonctions de la puce 34 sont beaucoup moins complexes que les fonctions de la puce 38 de sorte que son seuil de déclenchement pour entrer en phase active est beaucoup plus bas que celui de la puce 38, en d'autre terme, la quantité d'énergie nécessaire pour alimenter la puce 34 de façon à la faire fonctionner est inférieure à la quantité d'énergie nécessaire pour alimenter la puce 38 de façon à la faire fonctionner. Par conséquent, la puce 34 consommant moins d'énergie que la puce 38 est alimentée la première. De façon à garantir davantage cette chronologie de télé-alimentation des puces, l'antenne 32 est dimensionnée et paramétrée de façon à ce qu'elle récupère en premier l'énergie nécessaire à l'alimentation de la puce 34 qui se met instantanément dans un mode d'émission de données aléatoires. La puce 34 est alimentée en premier avant la puce 38. Les signaux échangés utiles entre l'antenne 36 et le lecteur entrent en collision avec les données aléatoires émises par la puce 34 de façon à ce qu'elles se superposent et se mélangent. Les données utiles sont donc brouillées par les données aléatoires et leur lecture intempestive n'est pas possible.

Le lecteur 35 est muni de moyens pour que l'antenne secondaire 32 du dispositif radiofréquence secondaire ne soit pas traversée par les lignes de champ électromagnétique émises par le lecteur lorsque le dispositif sans contact est placé contre la face de lecture 31 du lecteur. Un moyen utilisé pour que l'antenne secondaire 32 du dispositif radiofréquence secondaire ne soit pas traversé par les lignes de champ électromagnétiques émises par le lecteur est représenté sur la figure 5 par un blindage 37 disposé sous la face de lecture du lecteur de façon à ce que lorsque la carte d'identité est poée sur ou au dessus la face de lecture, la dimension du blindage est telle qu'il se superpose à l'antenne secondaire de façon à ce qu'il recouvre entièrement la superficie délimitée par l'antenne. Le blindage est constitué d'une plaque métallique tel que du cuivre, un alliage d'argent ou de l'aluminium afin de perturber les lignes de champ et empêcher l'alimentation de l'antenne secondaire. Ainsi la face de lecture 31 du lecteur 35 comporte une partie active abritant l'antenne 36 du lecteur 35 et une partie passive correspondant à l'emplacement abritant le blindage.

De cette façon, le lecteur 35 assure la réception et la transmission des signaux radiofréquences avec le dispositif sans contact donc avec le dispositif radiofréquence principal de la carte d'identité lorsque celle-ci est placée contre sa face de lecture 31 comme représenté sur la figure 6 sans être perturbé par l'émission de données aléatoires par le dispositif radiofréquence secondaire de la carte d'identité. En effet, lorsque la carte d'identité 30 est placée contre la face de lecture du lecteur 35, les lignes de champ émises par le lecteur ne traversent pas l'antenne 32 du dispositif secondaire à cause du blindage 37, par conséquent, le dispositif secondaire n'est pas alimenté en énergie et n'émet donc pas de données aléatoires qui empêcheraient la lecture des données de la puce principale.

Dans le cas d'un dispositif sans contact tel que le passeport décrit sur la figure 1, il est possible d'utiliser un modèle de lecteur du type de celui schématisé sur la figure 5, la taille de l'antenne du lecteur correspondant alors à la taille du passeport fermé. Pour être lu le passeport doit être présenté de façon à ce que l'antenne du passeport soit contre la face de lecture du lecteur. De préférence, le passeport est présenté sur le lecteur du côté de la couverture portant le dispositif secondaire. Pour être lu en position fermée, l'antenne 12 du dispositif radiofréquence secondaire du passeport sera plus petit que l'antenne 16 du dispositif radiofréquence principale de façon à ce que seule l'antenne principale est traversée par les lignes de champ émises par le lecteur, l'antenne secondaire 12 étant alors masquée par le blindage 37 du lecteur.

Selon un second mode de réalisation de l'invention et en référence à la figure schématique 8, les deux dispositifs radiofréquence principal et secondaire sont connectés ensemble. Le dispositif radiofréquence principal comporte une puce 68 et une antenne 66 connectées ensemble, la puce 68 étant comme pour le premier mode de réalisation la puce principale contenant les données personnelles d'identification du porteur de l'objet portable. De ce fait, la puce électronique 68 comprend plusieurs fonctions complexes destinées à traiter les informations en provenance du lecteur. Ainsi, pour pouvoir interpréter, stocker et comparer les informations et dialoguer avec le lecteur, la puce contient un micro contrôleur, de la mémoire, une unité d'entrée/sortie, etc.... Le dispositif radiofréquence secondaire est composé d'un circuit électrique,par exemple contenu dans une puce 64 et d'une antenne 62.

Le circuit électrique de la puce 64 est un circuit simple tel qu'un circuit de détection de champ et donc ne contient ni micro contrôleur, ni mémoire, elle est par conséquent beaucoup moins complexe que la puce 68 de sorte que son seuil de déclenchement pour rentrer en phase active est beaucoup plus bas que la puce 68, en d'autre terme, la quantité d'énergie nécessaire pour alimenter la puce 64 de façon à la faire fonctionner est inférieure à la quantité d'énergie nécessaire pour alimenter la puce 68 de façon à la faire fonctionner. Par conséquent, la puce 64 consommant moins d'énergie que la puce 68 est alimentée la première.

Le circuit électrique tel que le circuit de détection de champ peut être intégré directement à la puce principal. Dans ce cas, il s'agit d'une puce à deux étages d'entrée un pour chacun des deux dispositifs. Le circuit de détection de champ permet par exemple de générer un niveau de tension de référence Vu (par exemple 5V) en présence du champ du lecteur afin de fournir un signal logique de désactivation de la fonctionnalité principale de la puce 68 de façon à la rendre muette. Le signal logique de désactivation est exploité par la puce 68 dés que celle-ci est alimentée de sorte que toute communication avec le lecteur est empêchée si le signal de désactivation est présent. Le signal logique de désactivation fournit par le circuit électrique 67 est émis avant que la puce principale 68 ne réponde car la quantité d'énergie nécessaire pour alimenter le circuit électrique 67 de façon à le faire fonctionner est inférieure à la quantité d'énergie nécessaire pour alimenter la puce 68 de façon à la faire fonctionner. Par conséquent, le circuit électrique 67 consommant moins d'énergie que la puce 68 est alimenté le premier. Certaines cartes à puce hybrides, c'est à dire fonctionnant à la fois en contact et en sans contact utilisent un principe de sélection équivalent au démarrage pour faire le choix entre l'application de la fonction contact ou bien de la fonction sans contact. Le dispositif selon l'invention reprend ce principe pour sélectionner au démarrage la poursuite normale de l'application contenue dans la puce principale ou bien sa suspension ou encore l'interdiction des communications.

La puce principale 68 comprend dans son système d'exploitation une fonction déclenchée dés l'initialisation de la puce pour tester le signal logique de détection de champ fournit par la puce secondaire 64. Selon le résultat du test, l'application contenu dans le système d'exploitation de la puce principale 68 continue son exécution ou stoppe. En effet, la puce possède deux systèmes d'entrée dont l'un est prioritaire sur l'autre. Les deux dispositifs radiofréquence sont connectés ensembles par exemple par une connexion électrique 65 entre le circuit de détection de champ de la puce 64 et la puce 68 ou entre l'antenne 62 et la puce principale 68 dans le cas où le circuit de détection de champ est directement intégré à la puce 68.

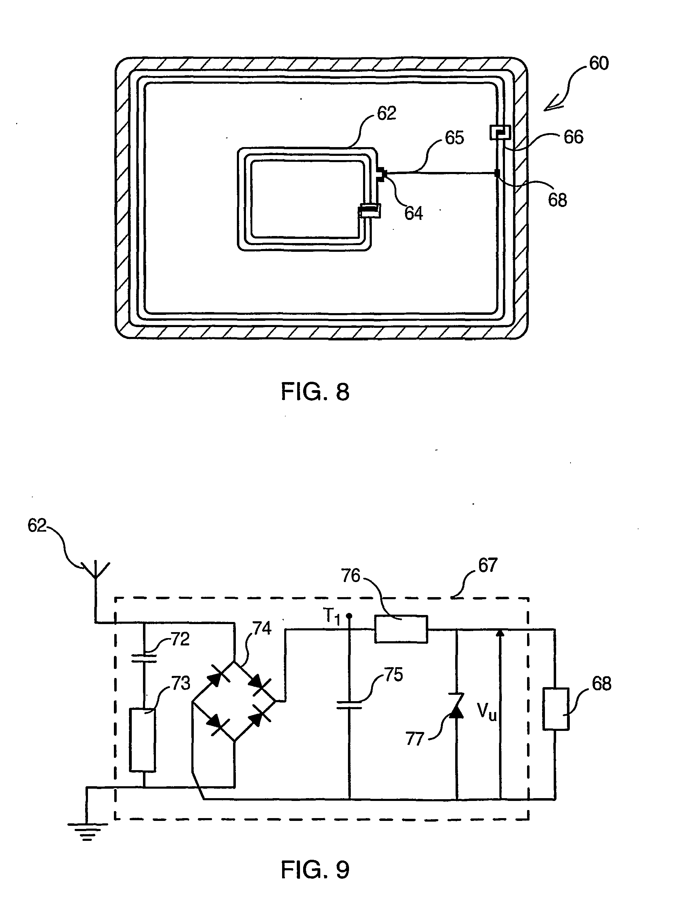

Comme pour le premier mode de réalisation de l'invention, le second mode peut s'appliquer à tout type d'objet portable sans contact tel qu'un document sécurisé muni d'un dispositif radiofréquence. Selon la figure 8, le document sécurisé est une carte d'identité mais pourrait aussi bien être un livret de type passeport comme représenté sur la figure 1. Dans ce cas, il y a deux possibilités d'emplacement pour l'antenne secondaire 62, soit elle se trouve sur la même page ou sur la même couverture que le dispositif radiofréquence principale soit elle se trouve sur une page du passeport mobile par rapport à la partie comprenant le dispositif principal ou sur la seconde couverture. La deuxième possibilité nécessite que la connexion électrique 65 passe sur la reliure du passeport.

La figure 9 représente le schéma électrique d'un exemple de réalisation du circuit électrique de détection de champ connecté à l'antenne secondaire 62. Le bloc 67 représente le circuit de détection de champ qui est soit dans la puce 64 soit directement intégré à la puce principale 68. L'antenne 62, le condensateur 72 et la résistance 73 constituent un circuit oscillant accordé à la fréquence du lecteur soit 13,56 MHz. Le pont de diodes 74 et le condensateur 75 ont pour rôle de redresser et lisser le signal alternatif, disponible aux bornes du circuit oscillant. Au point T1, la tension est continue et dépendante du champ électromagnétique auquel l'antenne est exposée. La diode zéner 77 permet de réguler la tension de sortie de référence Vu et est elle-même protégée d'un courant trop fort par une résistance 76. La tension en sortie du circuit de détection de champ est appliquée en entrée de la puce 68 par l'intermédiaire de la connexion électrique 65 ou pas, et constitue le signal logique mentionnée précédemment. L'antenne 62 en entrant dans un champ de fréquence porteuse, alimente la puce 64 et donc le circuit 67, la tension de sortie passe à la valeur de référence Vu. L'antenne 62 n'étant pas dans le champ de fréquence porteuse, aucun courant ne la traverse et le circuit 64 délivre une tension nulle.

Si le circuit de détection de puce est directement intégré à la puce principale 68, les deux antennes sont directement connectées à la puce principale 68. Lorsque l'objet portable sans contact 60 comportant les deux dispositifs rentre dans le champ du lecteur 35 tel que représenté à la figure 5, les deux antennes 66 et 62 accordées dans la même bande de fréquence que le lecteur reçoivent l'énergie nécessaire à leur alimentation. L'énergie fournie doit être supérieure ou suffisante au bon fonctionnement des applications des puces 68 et 64. La puce 64 consommant moins d'énergie que la puce 68 du fait de son seuil de déclenchement inférieur fournie le signal logique avant que la puce 68 ne soit initialisée. De façon à garantir davantage cette chronologie de télé-alimentation des puces, l'antenne 62 est dimensionnée et paramétrée de façon à ce qu'elle récupère en premier l'énergie nécessaire à l'alimentation de la puce. Donc, dés que l'antenne 62 rentre dans le champ, elle récupère en premier l'énergie nécessaire à l'alimentation de la puce 64 et donc à l'alimentation du circuit de détection de champ 67 qui délivre une tension représentant le signal logique de détection de champ à la puce principale 68. La puce principale 68 se met alors instantanément dans un mode où aucun signal n'est échangé avec le lecteur rendant la puce principale 68 muette et par là même la lecture des données impossible.

Lorsque l'on veut lire les données de la puce principale 68 de l'objet portable sans contact, le circuit de détection de champ ne doit pas être alimenté par conséquent, l'antenne 62 ne doit pas être traversée par les lignes de champ électromagnétique émise par l'antenne du lecteur. Pour cela, l'objet portable sans contact doit être placé sur un lecteur de sorte que l'antenne secondaire 62 soit masquée. Dans le cas d'un livret tel qu'un passeport, si les deux antennes sont placées chacune sur une partie du passeport mobile l'une par rapport à l'autre, le passeport doit être placé ouvert de la même façon que dans le premier mode de réalisation sur un lecteur 25 du type de celui décrit dans les figures 2 et 3. Il peut être également lu sur un lecteur 35 de la même façon que dans l'exemple de la figure 7 décrit précédemment. Dans le cas d'une carte d'identité, les deux antennes sont placés sur la même partie plane, la lecture des données se fait comme dans l'exemple des figures 4 à 6 précédemment décrits.

Selon une variante de réalisation du dispositif selon le mode préféré de l'invention, le dispositif radiofréquence secondaire peut comporter une antenne à deux ensembles de spires, chaque ensemble comportant au moins une spire. Le premier ensemble comporte une ou plusieurs spires aussi grande que la spire 12 définit pour le dispositif radiofréquence secondaire de la figure 1. Le second ensemble comporte une ou plusieurs spires de taille plus petite que la taille des spires du premier ensemble. La taille des spires du second ensemble reste de préférence supérieure à la taille des spires de l'antenne du dispositif radiofréquence principal. L'antenne du dispositif radiofréquence secondaire comporte ainsi au moins deux ensembles de spires de taille différente.

## Revendications

1. Objet portable sans contact (10, 30, 60) comprenant un dispositif radiofréquence principale composé d'une puce principale (18, 38, 68) et d'une antenne principale (16, 36, 66) connectées ensemble de sorte que lorsque l'objet portable rentre dans le champ magnétique d'un lecteur adapté, le dispositif radiofréquence principale assure l'alimentation de la puce et la communication entre la puce et le lecteur ;
et d'un dispositif secondaire sans contact comprenant une antenne secondaire (12, 32, 62) et un circuit électrique **caractérisé en ce que** l'antenne secondaire et le circuit électrique sont paramétrés de façon à ce que, lorsque les deux antennes rentrent en même temps dans le champ magnétique d'un lecteur adapté, la quantité d'énergie nécessaire pour alimenter ledit circuit électrique de façon à le faire fonctionner étant inférieure à la quantité d'énergie nécessaire pour alimenter la puce principale (18, 38, 68) de façon à la faire fonctionner, ledit circuit électrique est alimenté et rend impossible la lecture des données de la puce principale.

2. Objet portable sans contact selon la revendication 1, dans lequel le circuit électrique est contenue dans une puce secondaire (14, 34, 64).

3. Objet portable selon la revendication 1 ou 2, dans lequel ledit circuit électrique (14) émet des données aléatoires dés qu'il reçoit l'énergie nécessaire à son fonctionnement de sorte que l'émission des données aléatoires se produit avant que la puce principale (18) puisse échanger des données avec le lecteur.

4. Objet portable selon la revendication 1, 2 ou 3, dans lequel l'antenne secondaire (62) est connectée au dispositif radiofréquence principal.

5. Objet portable sans contact selon la revendication 4, dans lequel ledit circuit électrique est un circuit de détection de champ.

6. Objet portable sans contact selon la revendication 6, dans lequel le circuit de détection de champ permet de générer une tension de 5V en présence du champ du lecteur afin de fournir un signal logique de désactivation de la fonctionnalité principale de la puce (68) de façon à la rendre muette.

7. Objet portable selon l'une des revendications1 à 6 dans lequel l'antenne secondaire (12) comporte au moins deux ensembles de spires de taille différente.

8. Livret tel qu'un passeport (10) définit selon l'une des revendication 1 à 7.

9. Carte d'identité (30, 60) selon l'une des revendications 1 à 7.

10. Lecteur radiofréquence (20) comprenant une face de lecture (24, 31) comprenant une partie active (26) abritant une antenne (28, 36) et une partie passive (27, 37) abritant un élément de masquage d'antenne, le lecteur étant adapté pour lire les données contenues dans l'objet portable sans contact selon l'une des revendications 1 à 9 lorsque la partie de l'objet portable sans contact contenant le dispositif radiofréquence principal est plaqué contre la partie active (26) du lecteur tandis que le dispositif secondaire sans contact est plaquée contre la partie passive.

11. Lecteur selon la revendication 10, dans lequel la partie passive (27, 37) abrite une plaque métallique dont la dimension est telle qu'elle se superpose à l'antenne secondaire de façon à recouvrir entièrement la superficie délimitée par l'antenne.

## Claims

1. A contactless portable object (10, 30, 60) featuring a main radiofrequency device made up of a main chip (18, 38, 68) and a main antenna (16, 36, 66) connected together so that when the portable object enters the magnetic field of a suitable reader, the main radiofrequency device provides power to the chip and ensures communication between the chip and the reader and a secondary contactless device featuring a secondary antenna (12, 32, 62) and an electric circuit;
**characterized in that** the secondary antenna and the electric circuit are set up in such a way that, when the two antennas enter the magnetic field of a suitable reader at the same time, the amount of energy required to power said electric circuit and have it operational being less than the amount of energy required to power the main chip (18, 38, 68) and have it operational, said electric circuit is powered and makes the reading of data of the main chip impossible.

2. The contactless portable object according to claim 1, in which the electric circuit is contained in a secondary chip (14, 34, 64).

3. The portable object according to claim 1 or 2, in which said electric circuit (14) transmits random data as soon as it receives the energy required for its operation so that the transmission of random data occurs before the main chip (18) can exchange data with the reader.

4. The portable object according to claim 1, 2, or 3, in which the secondary antenna (62) is connected to the main radiofrequency device.

5. The contactless portable object according to claim 4, in which said electric circuit is a field detection circuit.

6. The contactless portable object according to claim 6, in which the field detection circuit allows a voltage of 5V to be generated in the presence of the field of the reader in order to provide a logical signal for deactivating the main function of the chip (68) to make it silent.

7. The portable object according to any of claims 1 to 6 in which the secondary antenna (12) features at least two set of turns with different sizes.

8. The booklet such as a passport (10) defined according to any of claims 1 to 7.

9. The identity card (30, 60) according to any of claims 1 to 7.

10. The radiofrequency reader (20) featuring a reading face (24, 31) consisting of an active part (26) housing an antenna (28, 36) and a passive part (27, 37) housing an antenna masking element, the reader being adapted to read the data contained in the contactless portable object according to any of claims 1 to 9 when the part of the contactless portable object containing the main radiofrequency device is placed against the active part (26) of the reader whereas the secondary contactless device is placed against the passive part.

11. The reader according to claim 10, in which the passive part (27, 37) houses a metal plate whose dimension is such that it superimposes on the secondary antenna so as to completely cover the surface area defined by the antenna.

## Patentansprüche

1. Tragbarer kontaktloser Gegenstand (10, 30, 60), der eine RF-Hauptvorrichtung, die aus einem Hauptchip (18, 38, 68) und einer Hauptantenne (16, 36, 66) besteht, die so miteinander verbunden sind, dass, wenn der tragbare Gegenstand in das Magnetfeld eines geeigneten Lesegeräts kommt, die RF-Hauptvorrichtung die Versorgung des Chips und die Kommunikation zwischen dem Chip und dem Lesegerät gewährleistet, und eine kontaktlose Sekundärvorrichtung enthält, die eine Sekundärantenne (12, 32, 62) und eine elektrische Schaltung enthält, **dadurch gekennzeichnet, dass** die Sekundärantenne und die elektrische Schaltung so parametriert sind, dass, wenn die zwei Antennen gleichzeitig in das Magnetfeld eines geeigneten Lesegeräts kommen, wobei die zur Versorgung der elektrischen Schaltung für ihren Betrieb notwendige Energiemenge geringer als die zur Versorgung des Hauptchips (18, 38, 68) für seinen Betrieb notwendige Energiemenge ist, die elektrische Schaltung versorgt wird und das Lesen der Daten des Hauptchips unmöglich macht.

2. Tragbarer kontaktloser Gegenstand nach Anspruch 1, bei dem die elektrische Schaltung in einem Sekundärchip (14, 34, 64) enthalten ist.

3. Tragbarer Gegenstand nach Anspruch 1 oder 2, bei dem die elektrische Schaltung (14) Zufallsdaten sendet, sobald sie die für ihren Betrieb notwendige Energie empfängt, so dass das Senden der Zufallsdaten erfolgt, ehe der Hauptchip (18) Daten mit dem Lesegerät austauschen kann.

4. Tragbarer Gegenstand nach Anspruch 1, 2 oder 3, bei dem die Sekundärantenne (62) mit der RF-Hauptvorrichtung verbunden ist.

5. Tragbarer kontaktloser Gegenstand nach Anspruch 4, bei dem die elektrische Schaltung eine Felderfassungsschaltung ist.

6. Tragbarer kontaktloser Gegenstand nach Anspruch 5, bei dem die Felderfassungsschaltung es ermöglicht, in Gegenwart des Felds des Lesegeräts eine Spannung von 5V zu erzeugen, um ein logisches Signal zur Deaktivierung der Hauptfunktionalität des Chips (68) zu liefern, um ihn stumm zu schalten.

7. Tragbarer Gegenstand nach einem der Ansprüche 1 bis 6, bei dem die Sekundärantenne (12) mindestens zwei Gruppen von Windungen unterschiedlicher Größe aufweist.

8. Buch, z.B. ein Pass (10), definiert nach einem der Ansprüche 1 bis 7.

9. Ausweis (30, 60) nach einem der Ansprüche 1 bis 7.

10. RF-Lesegerät (20), das eine Leseseite (24, 31) enthält, die einen aktiven Teil (26), der eine Antenne (28, 36) aufnimmt, und einen passiven Teil (27, 37) enthält, der ein Antennenverdeckungselement aufnimmt, wobei das Lesegerät geeignet ist, um die im tragbaren kontaktlosen Gegenstand nach einem der Ansprüche 1 bis 9 enthaltenen Daten zu lesen, wenn der Teil des tragbaren kontaktlosen Gegenstands, der die RF-Hauptvorrichtung enthält, gegen den aktiven Teil (26) des Lesegeräts gedrückt ist, während die kontaktlose Sekundärvorrichtung gegen den passiven Teil gedrückt ist.

11. Lesegerät nach Anspruch 10, bei dem der passive Teil (27, 37) eine Metallplatte aufnimmt, deren Abmessung so ist, dass sie sich auf die Sekundärantenne legt, um die von der Antenne begrenzte Fläche ganz zu bedecken.
